# FASCICULE DE BREVET EUROPEEN

(11) **EP 1 038 843 B1**
(45) Date de publication et mention de la délivrance du brevet: **02.02.2005**
(21) Numéro de dépôt: 00400772.0
(22) Date de dépôt: 21.03.2000
(51) Int. Cl.: C03B 9/32, C03B 9/325

(54) **Produits creux en verre a axe de bague deporte**
Hohlglasgegenstände mit Hals aus der Achsemitte
Hollow glasswares with an off the axis neck

(30) Priorité: 25.03.1999 FR 9903718
(43) Date de publication de la demande: 27.09.2000
(73) Titulaire: SAINT-GOBAIN EMBALLAGE, 92400 Courbevoie (FR)
(72) Inventeur: Badin, Rémy, 76910 Criel (FR); Fosse, Lucien, 76260 Etalondes (FR)
(74) Mandataire: Le Cam, Stéphane Georges Elie

(56) Documents cités:
- DE-C- 567 621
- GB-A- 139 322

## Description

La présente invention est relative à la fabrication de produits en matériaux thermoplastiques moulables, notamment en verre tels que bouteilles, flacons, pots...

Les procédés classiques et largement employés à l'heure actuelle pour fabriquer les produits précités mettent en oeuvre des machines dites I.S. (Individual Section) et sont connus sous les désignations de procédés « soufflé-soufflé » et « pressé-soufflé ». Au cours de la première étape, la paraison ou goutte de verre est introduite dans un moule ébaucheur dont la base est prolongée par un moule de bague servant à la mise en forme définitive de la partie supérieure ouverte du produit fabriqué.

Le moule de bague a également une fonction de préhension de l'ébauche dans une opération ultérieure de retournement de celle-ci, préalable à la deuxième étape dans laquelle le moule ébaucheur est remplacé par un moule finisseur dans lequel le produit creux est mis en forme par soufflage.

Parmi les procédés couramment employés, le procédé « soufflé-soufflé » peut être décomposé en les étapes suivantes :
- *le chargement* : une goutte de verre ou paraison entre sous l'effet de son propre poids dans un premier moule (ébaucheur), par l'extrémité supérieure de celui-ci, correspondant au fond du produit fini tel que bouteille... ;
- *la compression* : après le chargement, un fond ébaucheur vient fermer le moule ébaucheur ; puis on effectue un soufflage d'air comprimé dans le moule ébaucheur par l'intermédiaire du fond ébaucheur pour forcer le verre à bien pénétrer dans la partie inférieure du moule, qui correspond à la bague du futur produit ; de plus cette compression assure un bon contact thermique entre le verre et le moule ;
- *le perçage* : un poinçon, de dimensions réduites, occupant approximativement la hauteur de la bague et fermant le bas du moule ébaucheur, se retire vers le bas, laissant place à une alimentation en air comprimé qui chasse devant lui le verre chaud moins visqueux situé au voisinage de l'axe du moule ébaucheur, le verre froid plus visqueux qui a été refroidi au contact du moule restant, quant à lui, en place ; une ébauche du futur produit est ainsi obtenue ;
- *le transfert* : lorsque l'ébauche s'est suffisamment refroidie dans le moule ébaucheur pour pouvoir être manipulée, elle est transférée dans un second moule (finisseur) qui a la forme du produit final ;
- *l'allongement et le soufflage* : une fois placée dans le moule finisseur, on laisse l'ébauche s'allonger un certain temps avant de la souffler pour lui donner la forme du produit ; cette étape d'allongement permet de bien répartir le verre dans tout le produit ;
- *l'extraction :* au contact du moule finisseur, le verre se refroidit rapidement, et quand sa viscosité est suffisamment basse, le produit est extrait du moule finisseur.

Le procédé « pressé-soufflé » ne diffère quant à lui du procédé « soufflé-soufflé » que dans la phase de formage de l'ébauche, qui est obtenue par le pressage du verre dans le moule ébaucheur fermé, au moyen d'un poinçon plus ou moins long qui pénètre dans le moule par le bas de celui-ci à travers le moule de bague. Il n'y a donc pas d'étapes de compression ni de perçage, l'ébauche du produit étant formée en une seule fois par ce pressage.

Ces procédés permettent de fabriquer des formes de produits axisymétriques ou non. Le dispositif mis en oeuvre comme indiqué ci-dessus ne constitue qu'une section d'une machine I.S. qui en comporte plusieurs.

Cependant, des formes de produits de plus en plus complexes sont envisagées, en particulier dans des applications d'emballage en parfumerie, cosmétique... L'invention permet à présent la réalisation d'un flacon, pot... dont la bague ne serait plus positionnée à l'extrémité mais sur un côté du corps même.

Pour fabriquer ce produit, on a maintenu dans un premier temps le moule de bague à sa position habituelle dans les moules ébaucheur et finisseur, c'est à dire en position verticale de l'axe du moule de bague à l'extrémité inférieure de la cavité du moule ébaucheur, respectivement à l'extrémité supérieure de la cavité du moule finisseur. Une telle disposition est difficile à réaliser industriellement : elle impose en effet, pour de nombreuses formes de réalisation du produit de l'invention, d'introduire la paraison de matière fondue dans la cavité du moule ébaucheur par une section d'entrée non verticale de celle-ci. Cette caractéristique nuit à la distribution de la matière fondue en masse compacte et homogène en fond de cavité du moule ébaucheur et notamment à proximité du moule de bague. En effet le contact de la matière fondue avec les parois de la cavité est augmenté et donc le refroidissement de la matière par le moule également. L'augmentation de viscosité de la matière qui en résulte nuit à la progression de celle-ci vers le fond de la cavité. Pour y remédier, les inventeurs ont décalé l'axe du moule de bague dans le moule ébaucheur (et dans le moule finisseur) par rapport à la verticale.

Ainsi, un premier objet de l'invention consiste en un procédé de fabrication d'un produit verrier comportant un corps et une bague, l'axe d'au moins une partie de ce corps et l'axe de cette bague n'étant pas parallèles, caractérisé en ce qu'il comprend les étapes consistant à :
- introduire une paraison de matière fondue dans la cavité d'un moule ébaucheur, dont au moins une section d'entrée de la paraison est sensiblement verticale ;
- laisser la matière fondue bien pénétrer dans le fond du moule ébaucheur y compris la partie correspondant à la bague du produit final, cette opération étant éventuellement assistée par soufflage ;
- percer la bague par translation d'un poinçon selon un axe non vertical ;
- effectuer éventuellement un soufflage par la bague après retrait du poinçon en vue du formage définitif de l'ébauche ;
- retourner l'ébauche par rotation de 180° par rapport à un axe horizontal et la transférer dans un moule finisseur ;
- et effectuer un soufflage par la bague afin de conférer au produit sa forme finale.

Conformément à des caractéristiques préférées du procédé :
- ladite section d'entrée de la paraison représente au moins 20%, de façon particulièrement préférée au moins 60% du volume total de cette cavité ;
- l'axe de translation dudit poinçon forme par rapport à la verticale un angle au moins égal à 60° et inférieur à 180°, de préférence compris entre 90 et 150°.

Un second objet de l'invention consiste en une machine I.S. destinée à la fabrication d'un produit tel que décrit ci-dessus. Cette machine I.S. comprend un moule ébaucheur dont au moins une partie substantielle supérieure de la cavité est sensiblement verticale, et un moule finisseur ; le moule de bague est positionné, de plus, dans le moule ébaucheur comme dans le moule finisseur de manière à former par rapport à la verticale un angle au moins égal à 60° et inférieur à 180°.

L'invention permet l'obtention par exemple d'un produit verrier comportant un corps et une bague, l'axe d'au moins une partie de ce corps et l'axe de cette bague n'étant pas parallèles. Grâce au procédé et à la machine I. S. selon l'invention il est possible d'obtenir un produit verrier dans lequel ladite partie du corps représente une proportion substantielle de la quantité de verre constituant le produit, c'est-à-dire au moins 20 %, de préférence au moins 60 %.

Selon une caractéristique particulièrement favorable eu égard au procédé et au dispositif conçus selon l'invention et décrits ci-dessous, l'axe de ladite partie du corps et l'axe de la bague forment un angle au moins égal à 60° et inférieur à 180°, de préférence compris entre 90 et 150°.

Comme mentionné précédemment, le produit de l'invention peut consister en une bouteille, un flacon ou un pot.

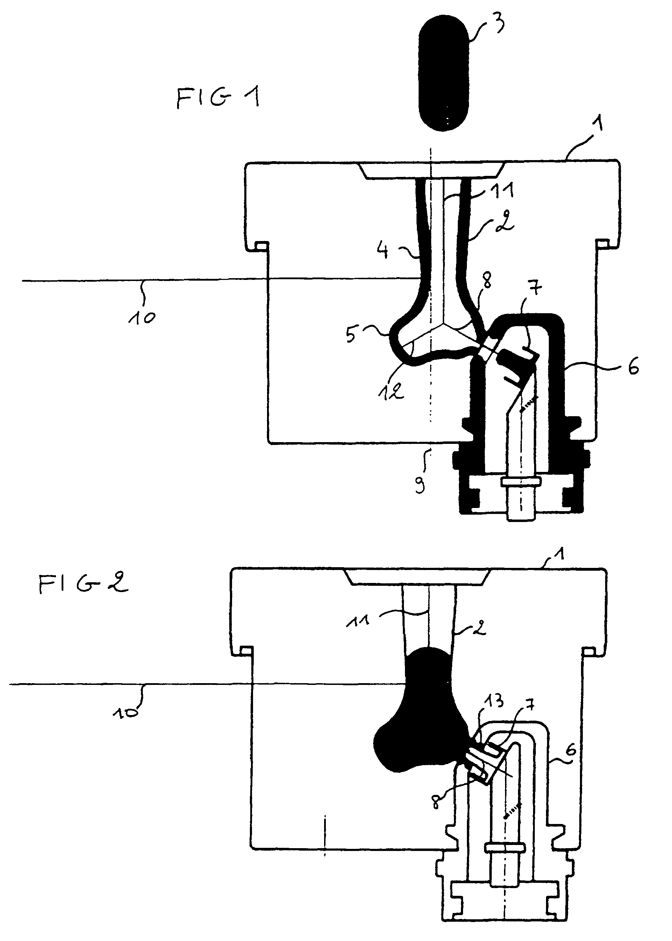

L'invention est illustrée par la description qui suit des dessins annexés, dans lesquels les figures 1 à 8 sont des représentations schématiques des étapes successives de la fabrication d'un produit selon l'invention.

En référence à la figure 1, un moule ébaucheur 1 faisant partie d'une machine I.S. reçoit dans sa cavité 2 une paraison de verre 3. La première partie 4 de la cavité 2 par laquelle entre la paraison 3 est sensiblement verticale. Outre de cette première partie 4, la cavité 2 est également formée d'une seconde partie 5 faisant suite à la première 4, plus courte que cette dernière et avec laquelle elle forme un angle de 120°. Le moule ébaucheur 1 comporte un logement destiné à recevoir un moule de bague 6 qui comprend un poinçon 7 ; l'axe du moule de bague 6, c'est à dire l'axe du poinçon 7 est représenté par le numéro de référence 8. Cet axe 8 habituellement vertical lui aussi est incliné, conformément à l'invention, de 120° par rapport à la partie 4.

Sont également représentés l'axe machine 9 situé dans le plan médian du moule ébaucheur 1, l'axe 10 représentant l'une des composantes du mouvement de retournement ultérieur décrit ci-dessous faisant passer le produit intermédiaire en verre du moule ébaucheur au moule finisseur, ainsi que les axes 11 et 12 des parties 4, respectivement 5 de la cavité 2.

Comme illustré par la figure 2, le verre remplit une partie inférieure de la cavité 2 et la bague 13 du flacon est formée par enfoncement du poinçon 7. Après le retrait de celui-ci, l'ébauche est formée par injection d'air comprimé comme indiqué par la flèche sur la figure 3, c'est à dire dans le corps de l'ébauche à travers le moule de bague 6.

L'ébauche est alors transférée côté moule finisseur 14 de la machine I.S. selon un mouvement de retournement, le moule de bague 6 servant d'organe de préhension de l'ébauche (figure 4). Sont également représentés sur cette figure l'axe machine 15 du moule finisseur 14 correspondant également au plan médian de celui-ci, et l'axe 16 du moule de bague 6 dans la position qui lui est fixée dans le moule finisseur 14. La cavité du moule finisseur 14 est construite de manière à respecter les relations angulaires existant dans le moule ébaucheur 1 entre les axes 8, 11 et 12.

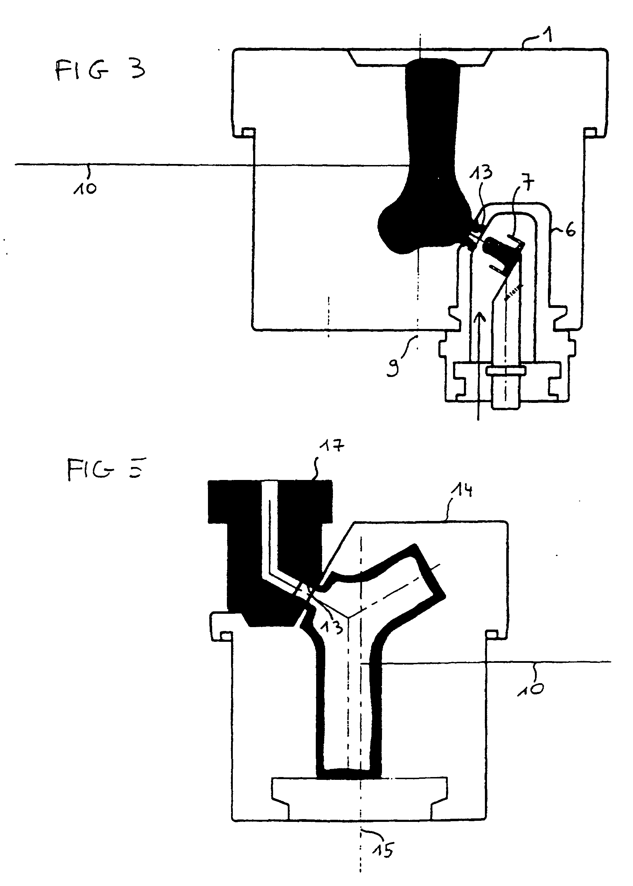

L'étape suivante représentée à la figure 5 consiste à remplacer dans le moule finisseur 14 le moule de bague 6 par une tête de soufflage 17 qui alimente l'intérieur de l'ébauche en air comprimé par la bague 13, ce qui permet d'obtenir la forme définitive du flacon. L'axe de la tête de soufflage 17 est bien entendu décalé de 120° par rapport à la verticale de la même manière que l'axe 16 du moule de bague 6.

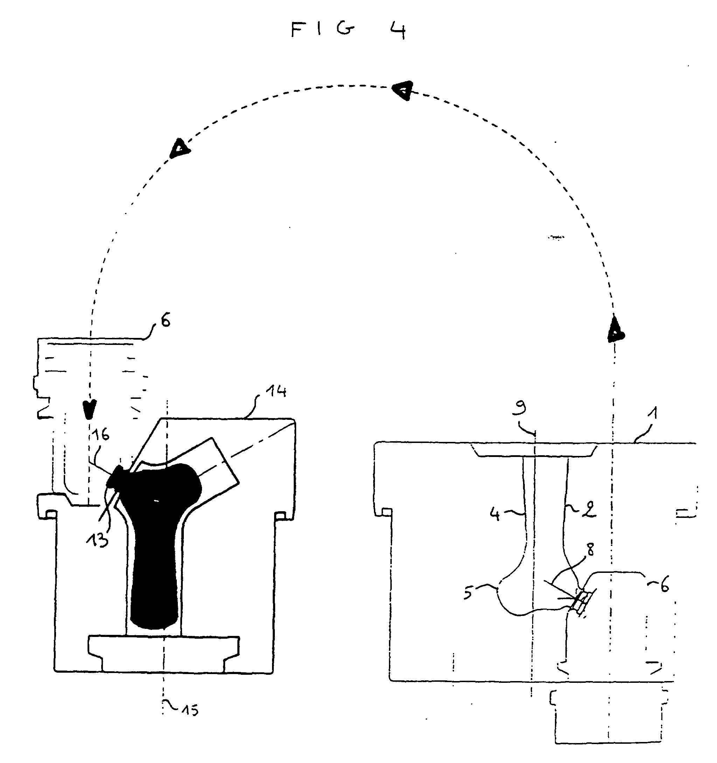

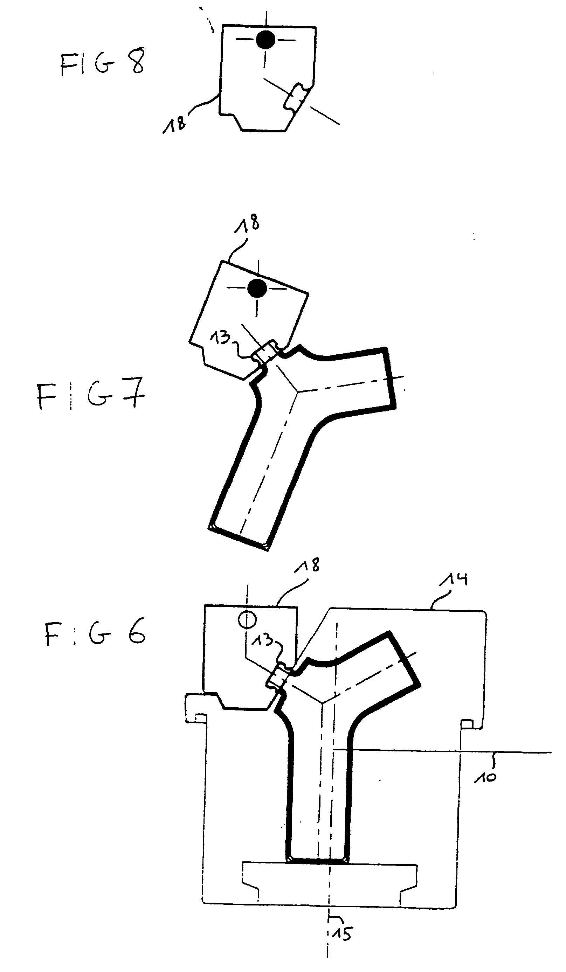

Le procédé comprend ensuite les opérations consistant à :
- saisir le flacon au moyen de pincettes 18 après ouverture du moule finisseur 14 (figure 6), les pincettes 18 étant avantageusement articulées pour s'orienter en fonction du centre de gravité de l'ensemble et éviter une déformation de la bague 13 encore fragile (figure 7) ;
- et repositionner les pincettes en décalage de 120° par rapport à la verticale pour retourner prendre le flacon suivant (figure 8).

Ainsi l'invention met-elle à disposition un produit creux en matériau thermoplastique, notamment en verre, de forme complexe, dans lequel l'axe de la bague est décalé par rapport à l'axe d'une partie au moins du corps du produit, ainsi qu'un procédé de fabrication de ce produit. La qualité atteinte est excellente en particulier par le fait que sont garantis, comme indiqué ci-dessus, une répartition homogène du matériau thermoplastique dans les moules, entre autre au voisinage de la bague, une limitation du contact de la paraison avec les parois du moule ébaucheur diminuant les transferts thermiques et optimisant la viscosité et le fluage du matériau, et un remplissage satisfaisant du fond de cavité du moule ébaucheur.

## Revendications

1. Procédé de fabrication d'un produit verrier comportant un corps et une bague, l'axe d'au moins une partie de ce corps et l'axe de cette bague n'étant pas parallèles, **caractérisé en ce qu'**il comprend les étapes consistant à :
- introduire une paraison (3) de matière fondue dans la cavité (2) d'un moule ébaucheur (1), dont au moins une section (4) d'entrée de la paraison est sensiblement verticale ;
- laisser la matière fondue bien pénétrer dans le fond du moule ébaucheur y compris la partie correspondant à la bague (13) du produit final, cette opération étant éventuellement assistée par soufflage ;
- percer la bague (13) par translation d'un poinçon (7) selon un axe (8) non vertical ;
- effectuer éventuellement un soufflage par la bague (13) après retrait du poinçon (7) en vue du formage définitif de l'ébauche ;
- retourner l'ébauche par rotation de 180° par rapport à un axe horizontal et la transférer dans un moule finisseur (14) ;
- et effectuer un soufflage par la bague (13) afin de conférer au produit sa forme finale.

2. Procédé selon la revendication 1, **caractérisé en ce que** ladite section (4) d'entrée de la paraison représente au moins 20 %, de préférence au moins 60 % du volume total de ladite cavité (2).

3. Procédé selon la revendication 1 ou 2, **caractérisé en ce que** l'axe de translation dudit poinçon (7) forme par rapport à la verticale un angle au moins égal à 60° et inférieur à 180°, de préférence compris entre 90 et 150°.

4. Machine I.S. destinée à la mise en oeuvre d'un procédé selon l'une des revendications 1 à 3, **caractérisée en ce qu'**elle comprend un moule ébaucheur (1) dont au moins une partie substantielle supérieure (4) de la cavité (2) est sensiblement verticale, ainsi qu'un moule finisseur (14), et **en ce que** le moule de bague (6) est positionné dans le moule ébaucheur (1) comme dans le moule finisseur (14) de manière à former par rapport à la verticale un angle au moins égal à 60° et inférieur à 180°.

## Patentansprüche

1. Verfahren zur Herstellung eines Glaserzeugnisses, das einen Körper und einen Ring umfasst, wobei die Achse wenigstens eines Teils dieses Körpers und die Achse dieses Rings zueinander nicht parallel stehen, **dadurch gekennzeichnet, dass** es die Stufen umfasst, die bestehen aus dem:
- Füllen eines Vorformlings (3) aus geschmolzenem Material in den Hohlraum (2) einer Vorform (1), wobei mindestens ein Einfüllabschnitt (4) für den Vorformling im Wesentlichen senkrecht steht,
- ordnungsgemäßen Fließenlassen des geschmolzenen Materials bis zum Boden der Vorform, worin der dem Ring (13) des fertigen Erzeugnisses entsprechende Teil enthalten ist und dieser Vorgang gegebenenfalls von einem Blasvorgang unterstützt wird,
- Bohren des Rings (13) durch die Translationsbewegung eines Stempels (7) in einer nicht vertikalen Achse (8),
- gegebenenfalls Durchführen eines Blasvorgangs durch den Ring (13) hindurch nach Herausziehen des Stempels (7), um dem Vorformling die endgültige Form zu verleihen,
- Drehen des Vorformlings um 180° in Bezug auf eine horizontale Achse und Übergeben in eine Fertigform (14) und
- Durchführen eines Blasvorgangs durch den Ring (13) hindurch, um dem Erzeugnis seine endgültige Form zu verleihen.

2. Verfahren nach Anspruch 1, **dadurch gekennzeichnet, dass** der Einfüllabschnitt (4) für den Vorformling mindestens 20 % und vorzugsweise mindestens 60 % des Gesamtvolumens des Hohlraums (2) ausmacht.

3. Verfahren nach Anspruch 1 oder 2, **dadurch gekennzeichnet, dass** die Translationsachse des Stempels (7) einen Winkel von mindestens 60° und kleiner als 180° und vorzugsweise von 90 bis 150° in Bezug auf die Senkrechte bildet.

4. IS-Maschine, die für die Durchführung eines Verfahrens nach einem der Ansprüche 1 bis 3 vorgesehen ist, **dadurch gekennzeichnet, dass** sie eine Vorform (1), wovon wenigstens ein oberer wesentlicher Teil (4) des Hohlraums (2) im Wesentlichen senkrecht steht, und eine Fertigform (14) umfasst, und dass die Ringform (6) sowohl in der Vorform (1) als auch in der Fertigform (14) derart angeordnet ist, dass sie einen Winkel von mindestens 60° und kleiner als 180° in Bezug auf die Senkrechte bildet.

## Claims

1. Method of manufacturing a glass product comprising a body and a ring, the axis of at least part of this body and the axis of this ring not being parallel, **characterised in that** it comprises the steps consisting of:
- introducing a parison (3) of molten material into the cavity (2) of a parison mould (1), where at least one entry section (4) of the parison is substantially vertical;
- allowing the molten material to penetrate well into the bottom of the parison mould, including the part corresponding to the ring (13) of the final product, this operation possibly being assisted by blowing;
- piercing the ring (13) by translation of a punch (7) along a non-vertical axis (8);
- possibly effecting a blowing through the ring (13) after withdrawal of the punch (7) with a view to the definitive forming of the blank;
- turning the blank by rotation through 180° with respect to a horizontal axis and transferring it into a finishing mould (14);
- and effecting a blowing through the ring (13) in order to confer on the product its final form.

2. Method according to Claim 1, **characterised in that** the said entry section (4) of the parison represents at least 20% and preferably at least 60% of the total volume of the said cavity (2).

3. Method according to Claim 1 or 2, **characterised in that** the translation axis of the said punch (7) forms with respect to the vertical an angle of at least 60° and less than 180°, preferably between 90° and 150°.

4. IS machine intended for implementing a method according to one of Claims 1 to 3, **characterised in that** it comprises a parison mould (1) where at least a substantial top part (4) of the cavity (2) is substantially vertical, and a finishing mould (14), and **in that** the ring mould (6) is positioned in the parison mould (1) and in the finishing mould (14), so as to form with respect to the vertical an angle of at least 60° and less than 180°.
